# EUROPÄISCHE PATENTANMELDUNG

(11) **EP 1 186 473 A2**
(43) Veröffentlichungstag der Anmeldung: **13.03.2002**
(21) Anmeldenummer: 01121196.8
(22) Anmeldetag: 04.09.2001
(51) Int. Cl.: B60R 1/04

(54) **Rückspiegel, insbesondere für Kraftfahrzeuge**

(30) Priorität: 05.09.2000 DE 10043750
(71) Anmelder: MEKRA Lang GmbH & Co. KG, 90765 Fürth (DE)
(72) Erfinder: Lang, Heinrich, 91465 Ergersheim (DE); Seiboth, Wolfgang, 91438 Bad Windsheim (DE); Centmayer, Stefan, 91465 Ergersheim (DE)
(74) Vertreter: Winter, Brandl, Fürniss, Hübner, Röss, Kaiser, Polte Partnerschaft

(57) **Zusammenfassung**

Bei einem Rückblickspiegel befindet sich die Spiegelschicht (16) auf der Außenseite (12) des Trägerteils (6). Das Trägerteil (6) dient somit nicht zum Abstützen und Lagern eines separaten Spiegelelementes, beispielsweise einer beschichteten Glasplatte oder dergleichen, und weiterhin ist das Trägerteil (6) nicht auf seiner Innenseite (14) mit der Spiegelschicht (16) versehen, das heißt, das Trägerteil (6) bzw. das Material des Trägerteils (6) muß keine besonderen optischen Eigenschaften aufweisen. Aufwendige Bearbeitungsschritte des Trägerteils (6) auf seiner Innenseite (14) vor dem Aufbringen der Spiegelschicht (16), d.h. Polierschritte etc., sind entbehrlich, da die Spiegelschicht (16) direkt auf der Außenseite (12) aufgebracht wird.

## Beschreibung

Die Erfindung betrifft einen Rückblickspiegel, insbesondere für Kraftfahrzeuge, nach dem Oberbegriff des Anspruches 1.

Bei der Konstruktion und Herstellung von Rückblickspiegeln ist es bekannt, den eigentlichen Spiegel, d.h. beispielsweise eine rückseitig bedampfte Glasplatte oder dergleichen auf einer Spiegeltragplatte anzuordnen, welche dann wiederum in einem Spiegelgehäuse angeordnet wird. Die Verbindung zwischen Spiegeltragplatte und Gehäuse kann hierbei starr sein, oder aber es ist ein Verstellmechanismus vorgesehen.

Aus dem DE-GM 80 34 459.8 ist ein Innenrückblickspiegel für Automobile bekannt geworden, bei welchem die Spiegeltragplatte aus einem durchsichtigen Kunststoffmaterial gefertigt ist, welches dann von der Rückseite her mit der Reflexionsschicht versehen wird, also beispielsweise bedampft wird. Hierdurch entfällt die Notwendigkeit, zwei separate Bauelemente vorzusehen, nämlich das eigentliche Spiegelelement (z.B. rückseitig bedampfte oder beschichtete Glasplatte) und Spiegeltragplatte. Dies ist vorteilhaft aus Gründen der Herstellungskosten, aus Gewichtsgründen etc.

Problematisch bei dem Innenrückspiegel gemäß des DE-GM 80 34 459.8 ist allerdings, daß die in Form eines transparenten Kunststoffteils ausgebildete Spiegeltragplatte, welche von ihrer Rückseite her mit der Reflexionsschicht versehen wird, vergleichsweise hohe optische Anforderungen erfüllen muß, damit der Spiegel im späteren Gebrauch zufriedenstellende optische Eigenschaften hat. Gerade beim Gießen oder Pressen hochtransparenter Kunststoffe ergeben sich jedoch immer wieder Probleme, welche die optischen Eigenschaften des erzeugten Bauteiles verschlechtern. Beispiele derartiger Probleme sind materialinhärente Schlieren, Lufteinschlüsse oder Oberflächenrauhigkeiten, welche die optischen Eigenschaften eines auf der Grundlage eines derartigen Kunststoffteils hergestellten Spiegels verschlechtern. Liegt beispielsweise eine gewisse Oberflächenrauhigkeit des transparenten Kunststoffteils auf derjenigen Seite vor, welche mit der Spiegelschicht versehen, beispielsweise bedampft wird, hat der spätere Spiegel schlechte Reflexionseigenschaften, neigt zu Verzerrungen etc.

Man ist daher dazu gezwungen, die Spiegeltragplatte, d.h. das transparente Kunststoffteil, vor der Beschichtung mit der Spiegelschicht zu behandeln, d.h. insbesondere zu polieren, um eine möglichst glatte, später die Spiegelschicht aufnehmende Oberfläche zu erhalten. Abgesehen davon, daß dies ein zusätzlicher und aufwendiger Herstellungsschritt ist, lassen sich materialinhärente Störungen, d.h. beispielsweise Schlieren, Lufteinschlüsse etc. auch durch einen Poliervorgang nicht beseitigen, so daß bei der Fertigung von Innenrückblickspiegeln etwa gemäß des DE-GM 80 34 459.8 mit einer vergleichsweise hohen Ausschußquote gerechnet werden muß.

Die vorliegende Erfindung hat es sich demgegenüber zur Aufgabe gemacht, einen Innenrückspiegel der im Oberbegriff des Anspruches 1 angegebenen Art zu schaffen, der die oben geschilderten Probleme nicht aufweist.

Erfindungsgemäß wird die genannte Aufgabe in überraschend einfacher Weise dadurch gelöst, daß die Spiegelschicht auf der Vorderseite des Kunststoffträgers aufgebracht wird.

Die eingangs genannten Nachteile und Probleme aus dem Stand der Technik werden hierdurch mit einem Schlag beseitigt: Das Bereitstellen zweier separater Bauelemente, d.h. Spiegel und Spiegeltragplatte, ist entbehrlich. Weiterhin ergeben sich die Probleme, wie sie beim Gegenstand des DE-GM 80 34 459.8 vorhanden sind, beim Gegenstand der vorliegenden Erfindung nicht, da die Tragplatte oder der Träger auf der Vorderseite mit der Spiegelschicht versehen wird. Auf irgendwelche optischen Eigenschaften des Materials für den Träger oder die Tragplatte braucht somit beim Gegenstand der vorliegenden Erfindung keinerlei Rücksicht genommen werden, da einfallendes Licht und von der Spiegelschicht reflektiertes Licht das Material des Trägers nicht durchdringen muß und somit hierin keinerlei wie auch immer geartete optische Verschlechterungen erfährt.

Vorteilhafte Weiterbildungen der Erfindung sind Gegenstand der Unteransprüche.

Aufgrund der Tatsache, daß die Spiegelschicht auf der Vorder- oder Außenseite des Trägers aufgebracht ist und somit nicht - wie beispielsweise im Falle des DE-GM 80 34 459.8 - durch das Material des Trägers geschützt ist, ist vorteilhafterweise auf der Spiegelschicht eine durchsichtige Schutzschicht angebracht, insbesondere aus Silikat.

In einer vorteilhaften Ausgestaltungsform besteht die Spiegelschicht aus Chrom, Aluminium, Titan oder Legierungen aus diesen Elementen.

Weist gemäß einer weiteren bevorzugten Ausführungsform der Träger einstückig angeformte Halteelemente zur Befestigung an oder in dem Gehäuse auf, ist die Montage des erfindungsgemäßen Rückblickspiegels wesentlich vereinfacht und einer Automatisierung zugänglich.

Gemäß einer weiteren bevorzugten Ausführungsform kann ein Verstellmechanismus vorgesehen sein, mit welchem das Gehäuse zusammen mit dem Spiegelelement oder das Spiegelelement in dem Gehäuse verschwenkbar ist.

Weiterhin kann der Träger - ebenfalls im Gegensatz zum DE-GM 80 34 459.8 - aus undurchsichtigem Kunststoff bestehen, d.h. aus einem Kunststoff, der keine hohen optischen Qualitäten aufweisen muß und damit entsprechend preiswert sein kann.

Weitere Einzelheiten, Aspekte und Vorteile der vorliegenden Erfindung ergeben sich aus der nachfolgenden Beschreibung von Ausführungsformen anhand der Zeichnung.

Es zeigt:
Fig. 1 eine seitliche Schnittdarstellung durch einen Träger;
Fig. 2 eine Fig. 1 entsprechende Darstellung eines in einem Spiegelgehäuse montierten Trägers; und
Fig. 3 eine ausschnittsweise Schnittdarstellung durch eine Abwandlung des Rückblickspiegels von Fig. 2.

In der nachfolgenden Beschreibung werden gleiche oder einander entsprechende Teile oder Elemente mit gleichen Bezugszeichen versehen. Weiterhin versteht sich, daß die nachfolgende Beschreibung als rein illustrativ und nicht einschränkend zu betrachten ist.

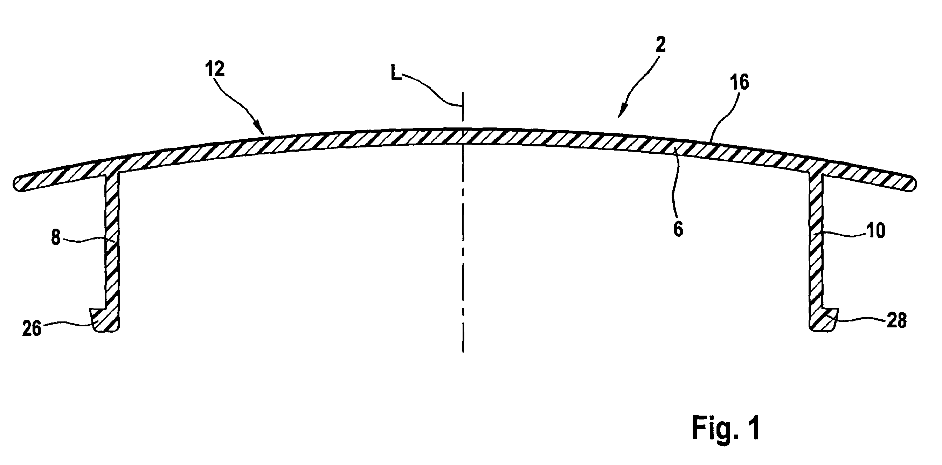

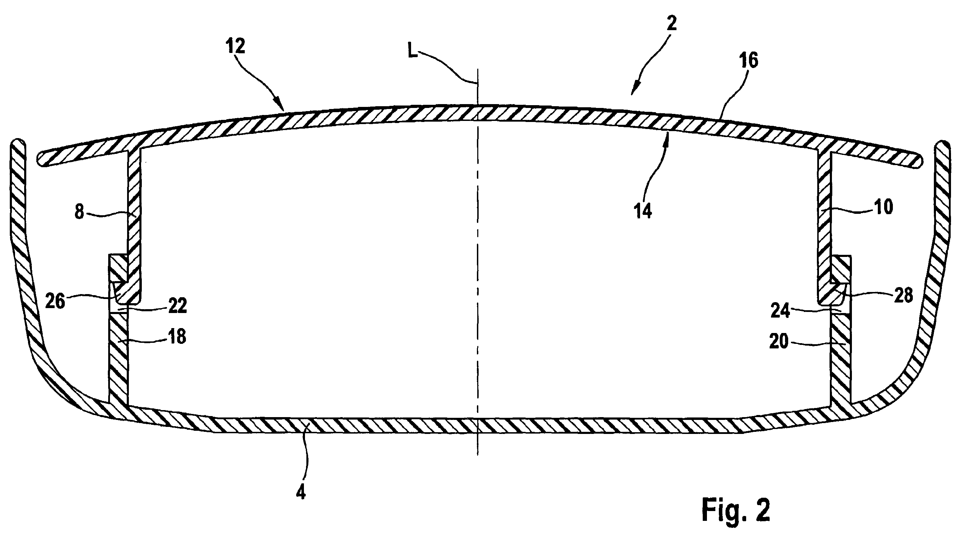

Fig. 1 zeigt in einer seitlichen Schnittdarstellung einen Träger oder eine Tragplatte 2, welche Teil des erfindungsgemäßen Rückblickspiegels ist. Fig. 2 zeigt den Einbauzustand der Tragplatte 2 in einem Spiegelgehäuse 4.

Die Tragplatte 2 weist den aus Fig. 1 ersichtlichen, im Querschnitt gewölbten Aufbau auf und ist entlang einer Längsachse L spiegelsymmetrisch ausgebildet, wobei jedoch diese spiegelsymmetrische Ausbildung nicht unbedingt erforderlich ist.

Die Tragplatte 2 besteht im wesentlichen aus dem eigentlichen Trägerteil 6, sowie Halteelementen 8 und 10, welche bevorzugt, jedoch nicht notwendigerweise an dem Trägerteil 6 einstückig ausgebildet sind. Besonders bevorzugt besteht die gesamte Tragplatte 2 aus einem einstückig geformten Kunststoffteil, wobei als Material für das Kunststoffteil der Tragplatte 2 jeder konstruktiv geeignete Kunststoff in Frage kommt, das heißt, das Material für die Tragplatte 2 muß keine besonderen optischen Eigenschaften aufweisen, sondern nur die konstruktiven Anforderungen hinsichtlich Haltbarkeit, Elastizität, Gewicht, Bearbeitbarkeit etc. erfüllen.

Gemäß Fig. 2 weist das Trägerteil 6 eine Außenseite 12 und eine Innenseite 14 auf, wobei die Außenseite 12 zur Außenseite des Spiegelgehäuses 4 weist und die Innenseite 14 in Richtung des Inneren des Spiegelgehäuses 4 weist.

Auf der Außenseite 12 ist auf das Trägerteil 6 eine Spiegelschicht 16 aufgebracht. Die Spiegelschicht 16 kann beispielsweise aus Chrom, Aluminium, Titan oder Legierungen aus diesen Elementen bestehen und wird mit einem geeigneten Verfahren auf die Außenseite 12 des Trägerteiles 6 aufgebracht, beispielsweise durch ein chemisches Abscheideverfahren, durch ein Dampfabscheideverfahren, durch Sputtern oder dergleichen. Bevorzugt wird auf die freie Außenseite der Spiegelschicht 16 eine in der Zeichnung nicht näher dargestellte durchsichtige Schutzschicht, insbesondere aus einem Silikat, aufgebracht, um die Spiegelschicht 16 vor mechanischen, chemischen oder atmosphärischen Belastungen zu schützen.

Aus Fig. 2 geht hervor, wie die Halteelemente 8 und 10 mit entsprechenden Gegenhaltemitteln 18 und 20 zusammenwirken. Die Gegenhaltemittel 18 und 20 sind im dargestellten Ausführungsbeispiel einstückig an dem Spiegelgehäuse 4 ausgebildete Vorsprünge mit Eingriffsöffnungen 22 und 24, in welche an den freien Enden der Halteelemente 8 und 10 ausgebildete Rastnasen 26 und 28 elastisch/formschlüssig eingreifen. Hierdurch ist das Trägerteil 6 unverlierbar mit dem Spiegelgehäuse 4 verbunden.

In Fig. 2 nicht näher dargestellt ist an dem Spiegelgehäuse 4 noch wenigstens ein Haltearm angeordnet, mit welchem das Spiegelgehäuse 4 gegenüber der Fahrzeugkarosserie gehalten wird. Hierbei kann sich zwischen dem Spiegelgehäuse 4 und dem Haltearm in bekannter Weise ein Verstellmechanismus befinden. Weiterhin kann sich anstelle der Verbindung zwischen den Öffnungen 22 bzw. 24 und Rastnasen 26 bzw. 28 zwischen dem Trägerteil 6 und dem Spiegelgehäuse 4 ein Verstellmechanismus befinden, mit welchem letzteres gegenüber dem ersteren in bekannter Weise verstellbar gehalten sein kann.

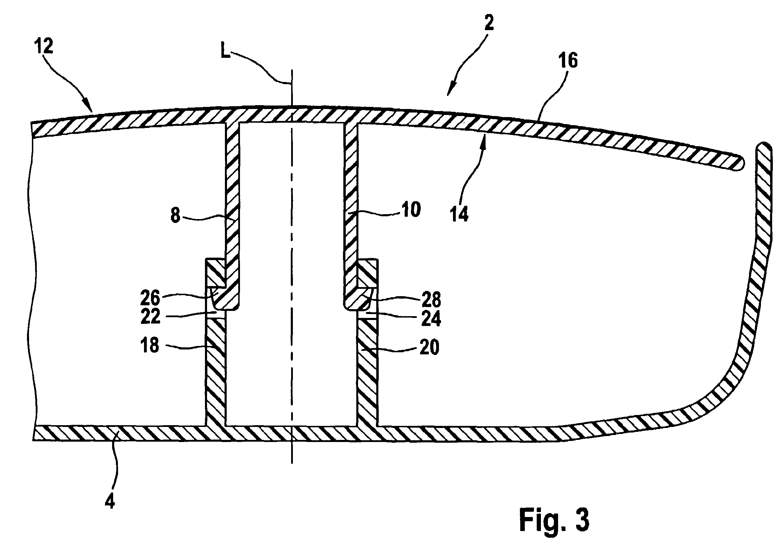

Fig. 3 zeigt eine Abwandlung der vorliegenden Erfindung, bei der die beiden Halteelemente 8 und 10 sich in der unmittelbaren Nachbarschaft der Längsmittelachse L befinden, wobei die Halteelemente 8 und 10 wieder die Rastnasen 26 und 28 aufweisen, welche in entsprechende Öffnungen 22 und 24 seitens der Gegenhaltemittel 18 und 20 eingreifen, die im dargestellten Ausführungsbeispiel wieder einstückig an dem Spiegelgehäuse 4 ausgebildet sind. Auch in der Ausgestaltungsform gemäß Fig. 3 kann der Eingriff zwischen den Rastnasen 26 und 28 und den Öffnungen 22 und 24 durch einen zentral oder mittig angeordneten Verstellmechanismus ersetzt werden.

Auch im Ausführungsbeispiel von Fig. 3 ist auf der Außenseite 12 des Trägerteils 6 die Spiegelschicht 16 aufgebracht.

In den in der Zeichnung dargestellten Ausführungsbeispielen befindet sich somit die Spiegelschicht 16 auf der Außenseite 12 des Trägerteils 6. Das Trägerteil 6 dient somit nicht zum Abstützen und Lagern eines separaten Spiegelelementes, beispielsweise einer beschichteten Glasplatte oder dergleichen, und weiterhin ist das Trägerteil 6 nicht auf seiner Innenseite 14 mit der Spiegelschicht 16 versehen, das heißt, das Trägerteil 6 bzw. das Material des Trägerteils 6 muß keine besonderen optischen Eigenschaften aufweisen. Aufwendige Bearbeitungsschritte des Trägerteils 6 auf seiner Innenseite 14 vor dem Aufbringen der Spiegelschicht 16, d.h. Polierschritte etc., sind entbehrlich, da die Spiegelschicht 16 direkt auf der Außenseite 12 aufgebracht und nachträglich mit der Schutzschicht versehen wird.

Durch den Gegenstand der vorliegenden Erfindung lassen sich somit die Vorteile erreichen, welche mit dem Gegenstand des gattungsbildenden DE-GM 80 34 459.8 erzielbar sind, das heißt, der Verzicht auf Tragplatte oder Träger plus eigentlichem Spiegelelement als zwei getrennte Bauteile, was hinsichtlich des Herstellungsaufwandes, des Gewichtes, der Vibrationsanfälligkeit etc. von Vorteil ist, ohne jedoch die dortigen Nachteile in Kauf nehmen zu müssen, welche sich ergeben, wenn das Trägerteil 6 auf seiner Innenseite 14 mit der Spiegelschicht 16 zu versehen wäre.

## Patentansprüche

1. Rückblickspiegel, insbesondere für Kraftfahrzeuge, mit einem Haltearm, mit einem an dem Haltearm befestigen Gehäuse (4) und mit einem an oder in dem Gehäuse (4) angeordneten Spiegelelement, das einen Träger (2, 6) aus Kunststoff mit einer zur Außenseite des Gehäuses (4) gewandten Außen- oder Vorderseite (12) und einer zur Innenseite des Gehäuses (4) gewandten Innen- oder Rückseite (14) aufweist und auf dem eine Spiegelschicht (16) aufgebracht ist,
**dadurch gekennzeichnet,**
**daß** die Spiegelschicht (16) auf der Vorderseite (12) aufgebracht ist.

2. Rückblickspiegel nach Anspruch 1, **dadurch gekennzeichnet, daß** die Spiegelschicht (16) mit einer durchsichtigen Schutzschicht, insbesondere aus Silikat, abgedeckt ist.

3. Rückblickspiegel nach Anspruch 1 oder 2, **dadurch gekennzeichnet, daß** die Spiegelschicht (16) aus Chrom, Aluminium, Titan oder Legierungen aus diesen Elementen besteht.

4. Rückblickspiegel nach einem der vorhergehenden Ansprüche, **dadurch gekennzeichnet, daß** der Träger (6) einstückig angeformte Halteelemente (8, 10) zur Befestigung an oder in dem Gehäuse (4) aufweist.

5. Rückblickspiegel nach einem der vorhergehenden Ansprüche, **gekennzeichnet durch** einen Verstellmechanismus zum Verschwenken des Gehäuses (4) zusammen mit dem Spiegelelement (6, 16) oder zum Verschwenken des Spiegelelements (6, 16) in dem Gehäuse (4).

6. Rückblickspiegel nach einem der vorhergehenden Ansprüche, **dadurch gekennzeichnet, daß** der Träger (6) aus undurchsichtigem Kunststoff besteht.
